(19) Europäisches Patentamt
European Patent Office
Office européen des brevets

(11) **EP 3 673 292 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **18743802.3**

(22) Anmeldetag: **23.07.2018**

(51) Internationale Patentklassifikation (IPC):
**G01S 13/931** *(2020.01)* **H01Q 21/06** *(2006.01)*
**G01S 13/44** *(2006.01)* **G01S 13/42** *(2006.01)*

(52) Gemeinsame Patentklassifikation (CPC):
**G01S 13/4445; G01S 13/42; G01S 13/931; H01Q 21/065**

(86) Internationale Anmeldenummer:
**PCT/EP2018/069904**

(87) Internationale Veröffentlichungsnummer:
**WO 2019/037996 (28.02.2019 Gazette 2019/09)**

(54) **ABBILDENDES RADARSYSTEM MIT EINEM EMPFANGSARRAY ZUR WINKELBESTIMMUNG VON OBJEKTEN IN ZWEI DIMENSIONEN DURCH EINE GESPREIZTE ANORDNUNG DER EMPFANGSANTENNEN EINER DIMENSION**

IMAGING RADAR SYSTEM HAVING A RECEIVING ARRAY FOR DETERMINING THE ANGLE OF OBJECTS IN TWO DIMENSIONS BY MEANS OF A SPREAD ARRANGEMENT OF THE RECEIVING ANTENNAS IN ONE DIMENSION

SYSTÈME RADAR D'IMAGERIE AVEC UN RÉSEAU DE RÉCEPTEURS POUR LA DÉTERMINATION DE L'ANGLE D'OBJETS EN DEUX DIMENSIONS PAR UNE DISPOSITION ÉTALÉE DES ANTENNES DE RÉCEPTION DANS UNE DIMENSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2017 DE 102017214575**

(43) Veröffentlichungstag der Anmeldung:
**01.07.2020 Patentblatt 2020/27**

(73) Patentinhaber: **ASTYX GmbH**
**85521 Ottobrunn (DE)**

(72) Erfinder:
• **GIERE, Andre**
**85667 Oberpframmern (DE)**
• **GUETLEIN-HOLZER, Johanna**
**81539 Muenchen (DE)**
• **MANN, Sebastian**
**81549 Muenchen (DE)**

(74) Vertreter: **Berkenbrink, Kai-Oliver**
**Patentanwälte Becker & Müller**
**Turmstrasse 22**
**40878 Ratingen (DE)**

(56) Entgegenhaltungen:
DE-A1-102014 219 113     US-A1- 2010 328 157
US-A1- 2011 080 314     US-A1- 2011 109 495
US-B1- 6 205 224     US-B1- 6 246 365

**Beschreibung**

**Technisches Gebiet**

Die vorliegende Erfindung betrifft eine Vorrichtung zur Bestimmung der Position von Objekten im zweidimensionalen Raum mit einer ersten Dimension und einer zweiten Dimension, deren Richtungsvektor orthogonal zum Richtungsvektor der ersten Dimension ist, enthaltend zumindest einen Sender mit mindestens einer Sende-Antenne und eine abbildende Empfängerschaltung mit zumindest einem Empfangsantennenarray (Rx Array) mit Empfangsantennen-Zeilen zur Abtastung der ersten Dimension mittels digitaler Strahlformung.

In der abbildenden Radar-Sensorik für automobile Anwendungen kommen derzeit diverse Verfahren der Strahlschwenkung zum Einsatz, welche sich in drei Kategorien untergliedern lassen. Dies sind die analoge Strahlformung mittels einer mechanischen Bewegung der Antenne, die Strahlschwenkung unter Verwendung von analogen Phasenschiebern sowie die digitale Strahlschwenkung mit dem Prinzip des "Digital Beamforming". Dabei werden mindestens eine Sende-Kanal und mehrere Empfangskanäle benötigt und die Antennenkeule durch Phasenverschiebungen der digitalisierten Empfangs-Signale geformt. Durch diese Technik wird der Hardware-Aufwand im Hochfrequenz-Frontend auf ein Minimum reduziert und gleichzeitig die Zuverlässigkeit und Flexibilität der Systeme erhöht. Außerdem können planare Antennen zum Einsatz kommen, was eine kompakte und kostengünstige Bauweise der Sensoren zulässt.

**Stand der Technik**

In automobilen Radarsensoren hat sich die Verwendung einer eindimensionalen digitalen Strahlformung (Beamforming) etabliert. Nachteilig erlaubt diese Technik jedoch keine Rückschlüsse auf die Position eines Objektes im zweidimensionalen Raum, sondern nur eine Ortsbestimmung in einer Dimension.

DE 10 2011 113 018 A1 beschreibt den Einsatz von mehreren Sende-Kanälen, wobei durch MIMO-on-TX die Apertur synthetisch erweitert wird und eine Vergrößerung des Schwenkwinkels ermöglicht. Darüber hinaus existieren diverse Methoden zur Positionsbestimmung eines Objektes im zweidimensionalen Raum, welche jeweils individuelle Stärken und Schwächen aufweisen.

Bei Verwendung eines voll aufgefüllten zweidimensionalen Arrays kann über die einzelnen Zeilen und Spalten ein Beamformer angewendet werden und somit die zwei-dimensionale Ortsbestimmung mittels eines CFAR-Algorithmus ermöglicht werden. Die Architektur sorgt für eine hohe Unterdrückung der Nebenkeulen und verringert das Auftreten von Falsch-Zielen. Der Nachteil dieser Architektur ergibt sich aus deren komplexen Aufbau, welcher die Einsetzbarkeit in automobilen Anwendungen erheblich einschränkt. Das primäre Einsatzgebiet derartiger Architekturen ergibt sich vornehmlich in militärischen Anwendungen. Neben dicht aufgefüllten Arrays werden auch sogenannte "Sparse Arrays" verwendet, bei denen gezielt Antennenzeilen des zweidimensionalen Empfangs-Arrays weggelassen werden. Der Routing-Aufwand wird bei dieser Implementierung auf Kosten einer geringeren Nebenkeulen-Unterdrückung deutlich verringert. Darüber hinaus werden weniger komplexe Architekturen mit sogenannten Amplituden-Monopuls eingesetzt. Die zwei-dimensionale Strahlformung ergibt sich aus zwei Sendeantennen und einem Empfangsarray, wobei die Sendeantennen ein zueinander verkipptes Antennendiagramm aufweisen. Die Ortsbestimmung in der zweiten Dimension ergibt sich dann aus den Antennendiagrammen sowie dem Amplitudenvergleich der Empfangssignale. Dieses Verfahren weißt jedoch den Nachteil auf, dass es einer komplexen, individuellen Kalibrierung der RadarSensoren bedarf, da es durch Art von Einbauposition und Abdeckung im Automobil zu teils starken Verzerrungen der Richtdiagramme der Antennen kommen kann.

Dieses Problem wird bei Einsatz eines Phasen-Monopuls umgangen, vgl. DE 10 2014 014 864 A1. Die Architektur wird dabei in Analogie zu der Architektur bei Amplituden-Monopuls aufgebaut. In der Signalverarbeitung wird jedoch nicht die Amplitude, sondern die Phasendifferenz zwischen den Empfangssignalen der beiden virtuellen Empfangsarrays ausgewertet. Ergänzend zu den vorab beschriebenen Verfahren ist es weiterhin möglich eine Ortsbestimmung auf Basis einer bekannten Strahlcharakteristik von Tx und/oder Rx Antennen umzusetzen.

Nachteilig kommen dabei eine oder alternativ mehrere Sende-Antennen sowie mehrere Empfangsantennen-Arrays mit jeweils mehreren Empfangsantennenzeilen zum Einsatz, was in einem erheblichen Platz- und Routing-Aufwand resultiert und nicht zuletzt die Kosten des Systems maßgeblich beeinflusst. Wünschenswert ist es daher, die Anzahl der Empfangsantennenzeilen ohne Verluste in der Funktionalität zu minimieren.

Aus US 6,246,365 B1 ist eine Vorrichtung gemäß dem Oberbegriff des Anspruchs 1 bekannt.

US 2010/0328157A1 beschreibt ein Radarsystem, das eine Antennengruppe mit einer Vielzahl von Antennenelementen und einer Vielzahl von Sendeantennen-Phasenzentren umfasst. Ein Senderteil ist an die Antennengruppe gekoppelt. Der Senderteil ist so konfiguriert, dass er eine Vielzahl von Sendestrahlen sendet, die durch ein Sendestrahlmuster gekennzeichnet sind. Ein Empfängerteil ist ebenfalls an das Antennen-Array gekoppelt. Der Empfängerteil ist so konfiguriert, dass er eine Vielzahl von orthogonalen Empfangssignalkomponenten aus einem von der Antennengruppe bereitgestellten Empfangssignal extrahiert. Die Mehrzahl der orthogonalen Empfangssignalkomponenten entspricht der Mehrzahl der orthogonalen Sendewellenformen. Mehrere extrahierte orthogonale Empfangssignalkomponenten werden digital strahl geformt, um ein virtuelles Antennenarray zu implementieren und ein Empfangssignal mit einer Empfangsstrahlbreite zu erzeugen. Die virtuelle Antennengruppe enthält eine Vielzahl von virtuellen Antennenelementen, die größer sind als die Vielzahl der Antennenelemente. Die Empfangskeulenbreite ist eine Funktion der Vielzahl der virtuellen Antennenelemente.

In der US 2011/0080314 A1 werden ein Fahrzeug-Radarsystem und ein Verfahren zur Bestimmung einer Position zumindest eines Objekts relativ zu einem Fahrzeug beschrieben. Das Fahrzeug-Radarsystem weist mindestens eine Sendeeinrichtung, mindestens drei Empfangseinrichtungen und eine Entfernungsmessungseinrichtung auf. Dabei sind mindestens zwei der Empfangseinrichtungen voneinander räumlich getrennt auf einer Geraden angeordnet. Mindestens eine der weiteren Empfangseinrichtungen ist höhenversetzt zu dieser Geraden angeordnet.

DE 10 2014 219 113 A1 beschreibt eine MIMO-Radarvorrichtung zum entkoppelten Bestimmen eines Elevationswinkels und eines Azimutwinkels eines Objekts sowie ein Verfahren zum Betreiben einer MIMO-Radarvorrichtung. Die MIMO-Radarvorrichtung umfasst: ein Antennenarray mit mehreren Sendeantennen, deren Phasenzentren entlang einer ersten Koordinatenrichtung voneinander beabstandet angeordnet sind; und mehreren Empfangsantennen, deren Phasenzentren entlang der ersten Koordinatenrichtung voneinander beabstandet angeordnet sind. Das jeweilige Phasenzentrum zumindest einer der Sendeantennen ist von den jeweiligen Phasenzentren der übrigen Sendeantennen um einen Versatzwert entlang einer zweiten Koordinatenrichtung beabstandet. US 6 205 224 B1 zeigt Vorteile der Verwendung von Antennenfeldern mit zufälliger Anordnung.

US 2011/109495 A1 offenbart ein Amplitudenmonopulsverfahren.

## Beschreibung der Erfindung

Der vorliegenden Erfindung liegt somit die Aufgabe zugrunde, eine verbesserte Vorrichtung und Verfahren zur berührungslosen Bestimmung der Position eines oder mehrerer Objekte im Raum mittels eines abbildenden Radarsensors unter Verwendung von digitalem Beamforming bereitzustellen.

Diese Aufgabe wird erfindungsgemäß durch eine Vorrichtung gemäß Anspruch 1 und einem Verfahren gemäß Anspruch 9 gelöst.

Der Grundgedanke der vorliegenden Erfindung liegt darin, dass das Empfangsantennenarray einen linearen Array, einen Sparse Array oder einen Array mit vergrößerter Apertur aufweist, wobei die Empfangsantennen-Zeilen des Empfangsantennenarrays der Empfängerschaltung in der ersten Dimension gemäß einer Kurvenfunktion oder gemäß der Kontur eines zweidimensionalen geometrischen Objektes linear angeordnet sind und in der zweiten Dimension aufgespreizt sind.

Die Erfindung zeichnet sich dabei dadurch aus, dass ein digitales Beamforming zur Ortsbestimmung von Objekten bei geringen Sidelobes in beiden Dimensionen möglich ist. Diese geringen Sidelobes ermöglichen es in der Anwendung eine geringe Falschzielrate zu gewähren.

Besonders vorteilhaft wird dabei eine in der ersten Dimension derart linear angeordnete Empfangsantennen-Array-Anordnung verwendet, dass eine zweite Sende-Antenne oder alternativ ein zweites Empfangs-Antennen-Array zur Ortsbestimmung in der zweiten Dimension nicht zwingend benötigt wird. Der Einsatzbereich des beschriebenen Millimeterwellen Radar-Sensors ist vornehmlich auf automobilen Anwendungen fokussiert, woraus sich Anforderungen an den Sensor ergeben, welche unter anderem dessen Größe, Abstands- und Winkel-Auflösung in Azimut und Elevation sowie die notwendige Update-Rate und somit die Maximal-Dauer einer einzelnen Messung betreffen. Gleichzeitig wird eine hohe Zuverlässigkeit ermöglicht, da die Sensorik in der Lage sein muss kurzfristig Hindernisse zu erkennen und relevante Daten wie deren Position und Ausdehnung dem Automobil zu Verfügung zu stellen. Vorteilhaft kommen dabei eine oder alternativ mehrere Sende-Antennen sowie mehrere Empfangsantennen-Arrays mit jeweils mehreren Empfangsantennenzeilen zum Einsatz, was in einem erheblichen Platz- und Routing-Aufwand resultiert und nicht zuletzt die Kosten des Systems maßgeblich beeinflusst. Ziel ist es deshalb, die Anzahl der Empfangsantennenzeilen ohne Verluste in der Funktionalität möglichst zu minimieren.

Bevorzugt sind die Empfangsantennen-Zeilen der Empfängerschaltung in der ersten Dimension als Gerade, Dreieck, Sägezahn, oder sinusförmig angeordnet. Alternativ sind die Empfangsantennen-Zeilen der Empfängerschaltung in der ersten Dimension als Rechteck, Kreis, oder Ellipse angeordnet.

Vorteilhaft handelt es sich bei dem beschriebenen Empfangsantennenarray (Rx-Array) um ein lineares Array, ein Sparse Array, oder um ein Array großer Apertur und beliebig platzierten Antennen. Die Anordnung der einzelnen Empfangsantennenzeilen erfolgt dabei unter Zuhilfenahme einer beliebigen Kurvenfunktion z.B. einer Gerade, einem Dreieck, einem Sägezahn, einer Sinus-Funktion oder alternativ an der offenen oder geschlossenen Kontur eines beliebigen zwei-Dimensionalen geometrischen Objektes, wie z.B. einem Rechteck, einem Dreieck (Bei offenen Kontur: V-Form), einem Kreis (Bei offenen Kontur: Kreisbogen) oder einer Ellipse, wobei jeweils die Ausrichtung der ersten sowie zweiten Dimension vorgegeben wird und eine Aufspreizung des Arrays in der zweiten Dimension erfolgt. Durch eine Aufspreizung des Arrays in einer zweiten Dimension gelingt es mit dem beschriebenen Array ohne ein weiteres Empfangsantennen-Array simultan Informationen über die Positionierung des Objektes im zweidimensionalen Raum bei geringen Sidelobes zu erhalten.

Vorzugsweise sind die Phasenzentren der Empfangsantennenzeilen der Empfängerschaltung in der zweiten Dimension in einem nicht-regelmäßigem Muster angeordnet.

Die Aufspreizung der Empfangs-Antennenzeilen erfolgt somit in einem nicht-regelmäßigem Muster und die Anzahl der verschiedenen diskreten Positionen in der zweiten Dimension der Empfangs-Antennenzeilen (6) $N_{Pos,2D}$ mindestens drei, jedoch

$$N_{Pos,2D} \geq \sqrt{N_{RxANT}}$$ beträgt, wobei die Anzahl der insgesamt verwendeten Empfangsantennenzeilen durch $N_{RxANT}$ gegeben ist. Um die Platzierung zu vereinfachen wird eine Zufalls-Funktion verwendet, wobei der Abstand der maximalen Abweichung vom Mittelwert in der zweiten Dimension vorgegeben wird.

Bevorzugt ist das reale Empfangsantennenarray (Rx ANT) der Empfänger-Schaltung durch mindestens zwei schaltbare Sende-Antennen mittels MIMO-on-Tx zu einem virtuellen Empfangsantennenarray (Rx Virt) mit einer Anzahl von virtuellen Elementen $N_{RxVirt}$ > $N_{RxANT}$ vergrößerbar.

Dabei sind in der zweiten Dimension die Phasenzentren der Sende-Antennen identisch, oder, zusätzlich oder alternativ, sind die Phasenzentren der Sende-Antennen in der zweiten Dimension verschiedenen, wodurch ein zusätzlicher Versatz im virtuellen Empfangsantennenarray (Rx Virt) ausgebildet wird.

Somit kann die Vorrichtung nicht nur für Radar-Systeme mit einem Sender und einer einzelnen Sende-Antenne verwendet werden, sondern vorteilhaft auch in Radar-Systemen mit sogenanntem MIMO-on-TX. Diese bezeichnet die Erweiterung eines realen Empfangsarrays zu einem virtuellen Array durch das Verwenden von mindestens zwei oder mehr schaltbaren Sende-Antennen. Die Anzahl der virtuellen Elemente $N_{RxVirt}$ > $N_{RxANT}$ ergibt sich aus der Anordnung der Sende-Antennen zu den Empfangskanälen. Dabei ergeben sich verschiedene Möglichkeiten der Anordnung der Sende-Antennen. Zunächst können die Sendeantennen derart angeordnet werden, dass diese in der zweiten Dimension keinen Versatz zueinander aufweisen und demnach keine zusätzliche Aufspreizung des virtuellen Empfangs-Arrays verursachen. Alternativ oder zusätzlich ist es jedoch auch möglich, weitere Sende-Antennen durch einen Versatz in der zweiten Dimension aktiv zur zusätzlichen Aufspreizung des Empfangsarrays zu nutzen. Durch unterschiedliche Methoden der Signalverarbeitung kann für beide Ausführungen der Vorrichtung als Hardware-Varianten eine Verbesserung der Strahlformung in mindestens eine Richtung erreicht werden.

Das Empfangs-Antennen-Array der Empfänger-Schaltung wird also unter Verwendung von mindestens zwei schaltbaren Sende-Antennen mittels MIMO-on-Tx zu einem virtuellen Array mit einer Anzahl von virtuellen Elementen $N_{RxVirt}$ > $N_{RxANT}$ vergrößert, insbesondere in der zweiten Dimension mit identischen Phasenzentren der Sende-Antennen, oder in der zweiten Dimension mit verschiedenen Phasenzentren der Sende-Antennen, so dass ein zusätzlicher Versatz im virtuellen Empfangs-Array generiert wird, oder, unter der Voraussetzung von mehr als 2 Sendeantennen, durch eine Kombination beider Varianten.

Neben einer Verbesserung der Fokussierung in der ersten Dimension, d.h. eine schmälere Antennenkeule in Hauptstrahlrichtung, wird durch die Erweiterung der Apertur auch eine Verbesserung der Grating Lobes durch Schalten der Sendeantennen unter Verwendung von Halbzeilen-SAR erreicht.

Eine Verbesserung in der zweiten Dimension ergibt sich dadurch, dass durch einen Versatz der Sendeantennen in der zweiten Dimension eine zusätzliche Aufspreizung erreicht wird und somit das Beamforming in dieser Dimension zu einer schmaleren Keule führt. Eine höhere Anzahl von Sendeantennen bei gleichzeitigem Versatz in der zweiten Dimension kann folglich in einer Verbesserung der Charakteristiken in beiden Dimensionen resultieren.

Bevorzugt eignet sich die beschriebene Vorrichtung zur Verwendung in einem Frequenz Moduliertem CW-Radar-Verfahren, in Digital Moduliertem Radar und/oder in einem Puls Radar.

Bevorzugt beträgt die Anzahl an Empfangsantennenzeilen $N_{RxANT} \geq 4$.

Bevorzugt sind die mindestens eine Sende-Antenne und die abbildende Empfängerschaltung im Frequenzbereich von 1 GHz bis 300 GHz, bevorzugt im Frequenzbereich von 20 GHz bis 160 GHz, besonders bevorzugt im Frequenzbereich 76 GHz bis 81 GHz, betreibbar.

Die Wirksamkeit der durch die Aufspreizung der Empfangsantennen zu erzielenden Verbesserungen ist daher unabhängig von der Grundform und ebenso unabhängig von dem verwendeten Radarverfahren. Aufgrund des Einsatzbereichs in Automobil-Radar-Anwendungen sind die beschriebene Vorrichtung sowie das Verfahren primär für das Frequenzband 76-81 GHz vorgesehen, jedoch nicht auf diesen Frequenzbereich limitiert. Die prinzipielle Verwendbarkeit ist im kompletten Zentimeter- und Millimeterwellenbereich im Bereich 1 GHz bis 300 GHz gegeben, aber nicht auf einen konkretisierten Frequenzbereich beschränkt.

Das erfindungsgemäße Verfahren zur Bestimmung der Position von Objekten im zweidimensionalen Raum mit einer ersten Dimension und einer zweiten Dimension, unter Verwendung der beschriebenen Vorrichtung, umfasst folgende Schritte:

- Senden eines Radarsignals mit mindestens einer Sende-Antenne;

- Empfangen eines Signals mittels abbildender Empfängerschaltung mit zumindest einem Empfangsantennen-array (Rx Array) zur Abtastung der ersten Dimension;

- Digitalisierung der Signaldaten;

- Durchführung einer Abstands-FFT und/oder einer Geschwindigkeits-FFT und einer digitalen Strahlformung;

- Objektdetektion und Positionsbestimmung.

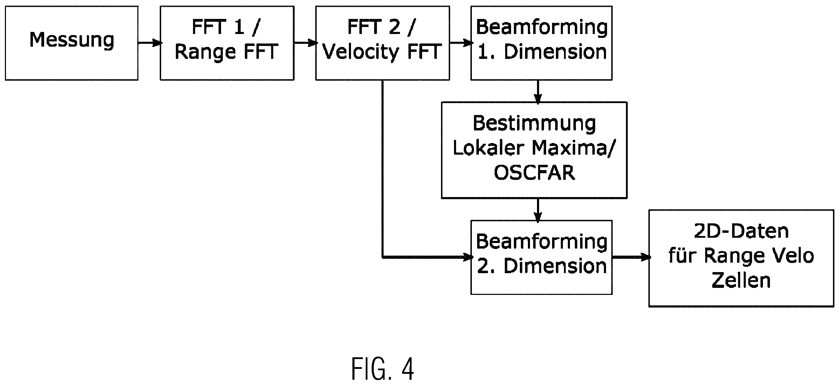

Die dem Verfahren zugrunde liegende Signalverarbeitung zur Berechnung der zwei-dimensionalen Zielposition ist in Abbildung 4 in Form eines Signalflussdiagramms für das Beispiels eines FMCW-Radar dargestellt. Im Anschluss an die Messung, also dem Senden, Empfangen und Digitalisieren einer Rampe wird zunächst mittels einer Abstands-FFT und einer Geschwindigkeits-FFT die Grundlage für das anschließende Digitale Beamforming gelegt. Die Zieldetektion erfolgt zunächst in der ersten Dimension z.B. mittels eines OSCFAR oder einer Peaksearch-Funktion, gefolgt von einem Beamforming in der zweiten Dimension basierend auf den FFT-Daten an den Positionen der zuvor in der ersten Dimension gefundenen Ziele. Die weitere Positionsbestimmung in der zweiten Dimension erfolgt wie unten beschrieben. Aus der Kombination beider Beamformer werden schließlich die zweidimensionalen Daten der sogenannten Range-Velo-Zellen berechnet. Bevorzugt erfolgt die Objektdetektion in der ersten Dimension und die Positionsbestimmung in der zweiten Dimension.

Die Zieldetektion in der zweiten Dimension erfolgt durch Digitales Beamforming über die in dieser Dimension unregelmäßig verteilten Elemente, wobei die erreichte Keulenbreite im Wesentlichen durch die Standardabweichung der Zufallsverteilung festgelegt wird. Zusätzlich kann außerdem Amplitudenmonopuls Anwendung finden.

Bevorzugt erfolgt bei erfolgreicher Objektdetektion in der ersten Dimension die anschließende Durchführung der Positionsbestimmung mit Strahlformung für mehrere Strahlen in der zweiten Dimension.

Bevorzugt erfolgt bei erfolgreicher Objektdetektion in der ersten Dimension die anschließende Durchführung der Positionsbestimmung mit Strahlformung und einem Amplitudenmonopuls für mehrere Strahlen in der zweiten Dimension.

Bevorzugt erfolgt bei Anordnung der Empfangsantennen-Zeilen des Empfangsantennenarrays gemäß einer Kurvenfunktion die anschließende Durchführung der Positionsbestimmung mit 2D-Strahlformung auf Basis der Phasenzentren
Nachfolgend wird eine Ausführungsform der Vorrichtung und des Verfahrens anhand der Zeichnung näher erläutert, ohne die Erfindung, die nur durch die beigefügten Ansprüche definiert wird, damit einschränken zu wollen.

In der beschriebenen Ausführungsform lässt sich die Anordnung mittels eines Kartesischen Koordinatensystems beschreiben, die Richtungsvektoren der beiden Dimensionen stehen orthogonal zueinander.

Dabei zeigen:

**Fig. 1** ein Frontend mit 16 Rx-Antennen und 1 Tx-Antenne. Anordnung der Rx-Antennen in 2-ter Dimension durch rand()*Max. Abweichung;

**Fig. 2** ein Antennenpattern in der 2-ten Dimension mit 3 geformten Beams durch verschiedene Positionierungen des Phasenzentrums in der 2-ten Dimension;

**Fig. 3** ein Antennendiagramm in der ersten Dimension für die in Tabelle 1 gelisteten Antennenpositionen (1 Dim. Linear, 2 Dimension zufällig erzeugt) und für ein lineares Array der Antennenpositionen ohne Abweichung in der zweiten Dimension;

**Fig. 4** ein Signalflussdiagramm der 2D-Ortsbestimmung bei Verwendung von FMCW; und

**Fig. 5** ein elliptische Array-Anordnung mit 2 Tx und 8 Rx.

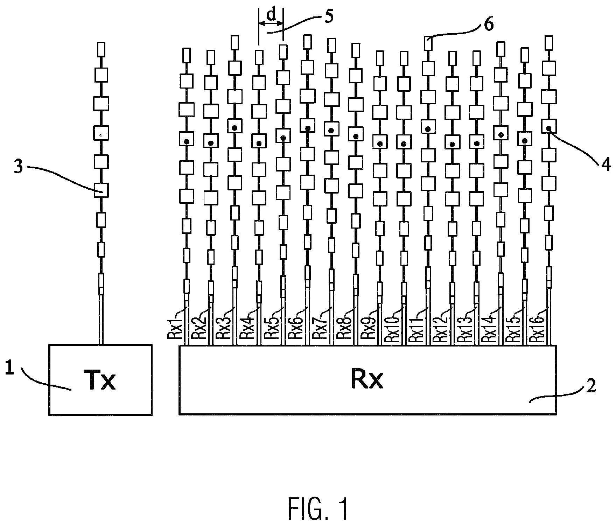

Fig. 1 zeigt eine derartige, beispielhafte Implementierung eines Radarfrontends bestehend aus einem Sender (1) mit einer Sendeantenne (3) und einer Empfängerschaltung (2) mit 16 Empfangs-Antennenzeilen (6), bei dem die Empfangs-Antennenzeilen (6) linear an einer Gerade entlang der ersten Dimension ausgerichtet sind. Die Aufspreizung des Arrays erfolgt in der zweiten Dimension, die orthogonal zur ersten Dimension liegt, unter Zuhilfenahme einer Random-Funktion. Die zugehörigen Positionen des linearen Arrays mit dem Zeilenabstand 2200 μm in der ersten Dimension und zufällig bestimmten Positionen in der zweiten Dimension sind in Tabelle 1 dargestellt:

Tabelle 1: Positionierung der Empfangsantennenzeilen des in Abbildung 1 dargestellten Array mit einer in Dimension 1 linearen Anordnung mit Zeilenabstand 2200 μm und in Dimension 2 zufällig erzeugten Anordnung der Antennen.

| Dim 1 (μm) | Dim 2 (μm) | |
|---|---|---|
| -1260 | 0 | Rx1 |
| -1620 | 2200 | Rx2 |
| 1490 | 4400 | Rx3 |
| -1650 | 6600 | Rx4 |
| -530 | 8800 | Rx5 |
| 1610 | 11000 | Rx6 |
| 890 | 13200 | Rx7 |
| -190 | 15400 | Rx8 |
| -1830 | 17600 | Rx9 |
| -1860 | 19800 | Rx10 |

(fortgesetzt)

| Dim 1 (μm) | Dim 2 (μm) | |
|---|---|---|
| 1370 | 22000 | Rx11 |
| -1880 | 24200 | Rx12 |
| -1830 | 26400 | Rx13 |
| 60 | 28600 | Rx14 |
| -1200 | 30800 | Rx15 |
| 1430 | 33000 | Rx16 |

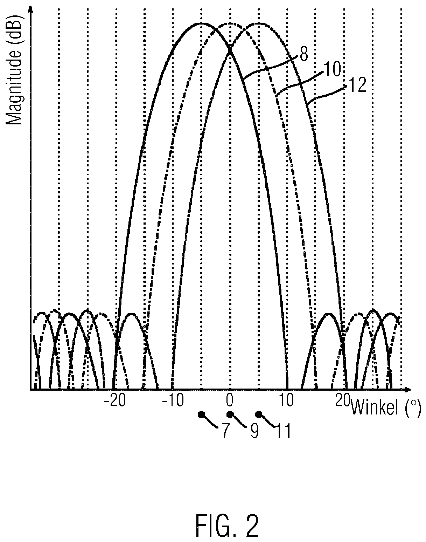

Fig. 2 zeigt drei resultierende Beams in der zweiten Dimension für das in Fig. 1 dargestellte Frontend mit einem Sender und 16 Empfangskanälen. Die Aufspreizung der Position des Phasenzentrums resultiert dabei in einem Winkelversatz der Blickrichtung der Beams und ermöglicht somit auch eine Auswertung in der zweiten Dimension. Die maximale Abweichung der Aufspreizung vom Mittelwert muss dabei derart festgelegt werden, dass bei einer endlichen Anzahl an Empfangszeilen das Beamforming in der ersten Dimension nicht maßgeblich beeinflusst wird.

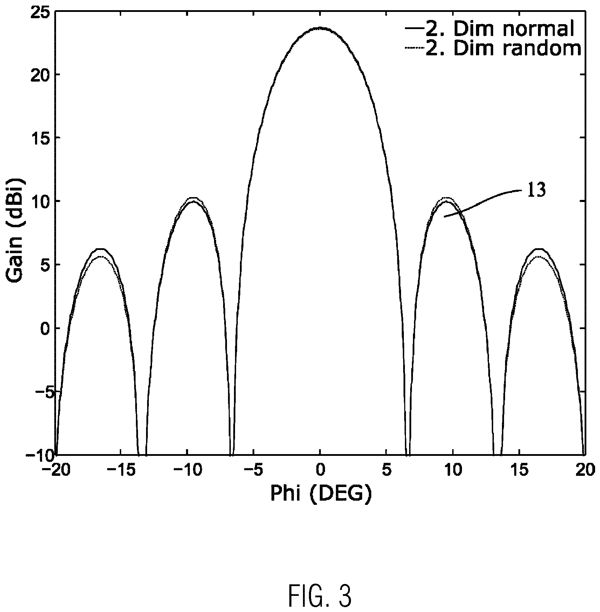

Fig. 3 zeigt exemplarisch das durch digitales Beamforming erzeugte Antennendiagramm für 0° Hauptstrahlrichtung im Vergleich zwischen einem linearen Array ohne und mit aufgespreizter zweiter Dimension. Dabei ist zu erkennen, dass sich die Auswirkungen des Aufspreizens in zweiter Dimension das Antennendiagramm nur marginal, vornehmlich an den Nebenkeulen zeigen.

Fig. 4 zeigt in Form eines Signalflussdiagramms am Beispiel eines FMCW-Radars die Signalverarbeitung zur Berechnung der zwei-dimensionalen Zielposition. Im Anschluss an die Messung, also dem Senden, Empfangen und Digitalisieren einer Rampe wird zunächst mittels einer Abstands-FFT und einer Geschwindigkeits-FFT die Grundlage für das anschließende Digitale Beamforming gelegt. Die Zieldetektion erfolgt zunächst in der ersten Dimension z.B. mittels eines OSCFAR oder einer Peaksearch-Funktion, gefolgt von einem Beamforming in der zweiten Dimension basierend auf den FFT-Daten an den Positionen der zuvor in der ersten Dimension gefundenen Ziele. Die weitere Positionsbestimmung in der zweiten Dimension erfolgt wie oben beschrieben. Aus der Kombination beider Beamformer werden schließlich die zweidimensionalen Daten der sogenannten Range-Velo-Zellen berechnet.

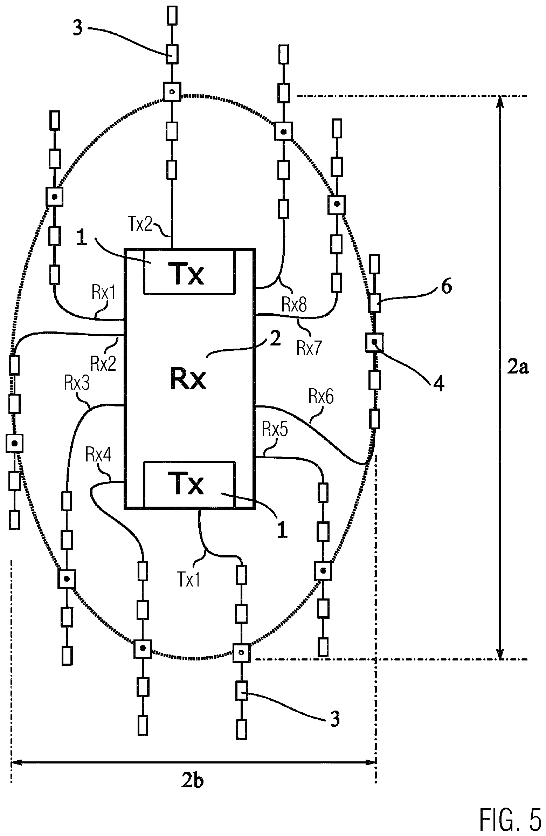

In Fig. 5 ist eine beispielhafte Anordnung eines MIMO-on-TX-Radarsystems basierend auf einer elliptischen Anordnung der Antennen dargestellt. Die Phasenzentren der acht Empfangsantennenzeilen (6) liegen in der gezeigten Anordnung auf der Kontur der Ellipse, welche durch deren Winkelabhängigen Radius r beschrieben wird:

$$r(\vartheta)^2 = \frac{a^2 b^2}{a^2 \sin(\vartheta) + b^2 \cos(\vartheta)},$$

wobei der maximale Radius durch a und der minimale Radius der Ellipse durch b festgelegt wird. Bei der gezeigten Anordnung bildet dabei der Radius die erste Dimension, wobei die Zufallsverteilung auf den Winkel angewendet wird, welcher demnach die zweite Dimension darstellt. Das MIMO-on-TX wird mittels zweier schaltbarer Sendeantennen (3) ermöglicht, die in unterschiedlicher Position bezogen auf die Ellipse platziert sind.

Bezugszeichen:

1  Sender
2  Empfängerschaltung
3  Sendeantenne
4  Phasenzentrum
5  Zeilenabstand
6  Empfangsantennenzeile
7  Blickrichtung (Ablage 1)
8  Richtcharakteristik Dim. 2 (Ablage 1)
9  Blickrichtung (Ablage 2)
10  Richtcharakteristik Dim. 2 (Ablage 2)
11  Blickrichtung (Ablage 3)
12  Richtcharakteristik Dim. 2 (Ablage 3)
13  Nebenkeulen

**Patentansprüche**

1. Vorrichtung zur Bestimmung der Position von Objekten im zweidimensionalen Raum mit einer ersten Dimension und einer zweiten Dimension, deren Richtungsvektor orthogonal zum Richtungsvektor der ersten Dimension ist, enthaltend zumindest einen Sender (1) mit mindestens einer Sende-Antenne (3) und eine abbildende Empfängerschaltung (2) mit zumindest einem Empfangsantennenarray, Rx Array, mit Empfangsantennen-Zeilen (6) zur Abtastung der ersten Dimension mittels digitaler Strahlformung, wobei das Empfangsantennenarray einen linearen Array, einen Sparse Array oder einen Array mit vergrößerter Apertur aufweist, und wobei die Empfangsantennen-Zeilen (6) des Empfangsantennen-arrays der Empfängerschaltung (2) in der ersten Dimension gemäß einer Kurvenfunktion oder gemäß der Kontur eines zweidimensionalen geometrischen Objektes angeordnet sind und in der zweiten Dimension aufgespreizt sind wobei die minimale Anzahl der diskreten Positionen, Pos 2D, in der zweiten Dimension durch die Anzahl der Empfangs-Antennenzeilen (6) $N_{RxANT}$ gemäß $N_{Pos,2D} \geq \sqrt{N_{RxANT}}$

festgelegt und $\geq 3$ ist,
**dadurch gekennzeichnet, dass**
die Anordnung der Empfangs-Antennenzeilen (6) durch eine Zufalls-Funktion festgelegt ist, wobei der Abstand der maximalen Abweichung vom Mittelwert in der zweiten Dimension vorgegeben wird.

2. Vorrichtung nach Anspruch 1, wobei die Empfangsantennen-Zeilen (6) der Empfängerschaltung (2) in der ersten Dimension als Gerade, Dreieck, Sägezahn, oder sinusförmig angeordnet sind, oder wobei die Empfangsantennen-Zeilen (6) der Empfängerschaltung (2) in der ersten Dimension als Rechteck, Kreis, oder Ellipse angeordnet sind.

3. Vorrichtung nach Anspruch 1 oder 2, wobei die Phasenzentren (4) der Empfangsantennenzeilen (6) der Empfängerschaltung (2) in der zweiten Dimension in einem nicht regelmäßigen Muster angeordnet sind.

4. Vorrichtung nach einem der Ansprüche 1 bis 3, wobei das reale Empfangsantennenarray, Rx ANT, der Empfänger-Schaltung (2) durch mindestens zwei schaltbare Sende-Antennen (3) mittels MIMO-on-Tx zu einem virtuellen Empfangsantennenarray, Rx Virt, mit einer Anzahl von virtuellen Elementen $N_{RxVirt} > N_{RxANT}$ vergrößerbar ist.

5. Vorrichtung nach Anspruch 4, wobei in der zweiten Dimension die Phasenzentren (4) der Sende-Antennen (3) identisch sind, oder wobei in der zweiten Dimension die Phasenzentren (4) der Sende-Antennen (3) verschiedenen sind und ein zusätzlicher Versatz im virtuellen Empfangsantennenarray, Rx Virt, ausgebildet wird.

6. Vorrichtung nach einem der Ansprüche 1 bis 5, zur Verwendung in einem Frequenz Moduliertem CW-Radar-Verfahren, in Digital Moduliertem Radar und/oder in einem Puls Radar.

7. Vorrichtung nach einem der Ansprüche 1 bis 6, wobei die Anzahl an Empfangsantennenzeilen (6) $N_{RxANT} \geq 4$ beträgt.

8. Vorrichtung nach einem der Ansprüche 1 bis 7, wobei die mindestens eine Sende-Antenne (3) und die abbildende Empfängerschaltung (2) im Frequenzbereich von 1 GHz bis 300 GHz, bevorzugt im Frequenzbereich von 20 GHz bis 160 GHz, besonders bevorzugt im Frequenzbereich 76 GHz bis 81 GHz, betreibbar sind.

9. Verfahren zur Bestimmung der Position von Objekten im zweidimensionalen Raum mit einer ersten Dimension und einer zweiten Dimension, unter Verwendung einer Vorrichtung nach den Ansprüchen 1-8, mit folgenden Schritten:

   - Senden eines Radarsignals mit mindestens einer Sende-Antenne (3)
   - Empfangen eines Signals mittels abbildender Empfängerschaltung (2) mit zumindest einem Empfangsantennenarray, Rx Array, zur Abtastung der ersten Dimension,
   - Digitalisierung der Signaldaten
   - Durchführung einer Abstands-FFT und/oder einer Geschwindigkeits-FFT und einer digitalen Strahlformung;
   - Objektdetektion und Positionsbestimmung.

10. Verfahren nach Anspruch 9, wobei die Objektdetektion in der ersten Dimension und die Positionsbestimmung in der zweiten Dimension erfolgt.

11. Verfahren nach Anspruch 9 oder 10, wobei bei erfolgreicher Objektdetektion in der ersten Dimension die anschließende Durchführung der Positionsbestimmung mit Strahlformung für mehrere Strahlen in der zweiten Dimension erfolgt.

12. Verfahren nach wenigstens einem der Ansprüche 9 bis 11, wobei bei erfolgreicher Objektdetektion in der ersten Dimension die anschließende Durchführung der Positionsbestimmung mit Strahlformung und einem Amplitudenmonopuls für mehrere Strahlen in der zweiten Dimension erfolgt.

13. Verfahren nach wenigstens einem der Ansprüche 9 bis 12, wobei bei Anordnung der Empfangsantennen-Zeilen (6) des Empfangsantennenarrays gemäß einer Kurvenfunktion die anschließende Durchführung der Positionsbestimmung mit 2D-Strahlformung auf Basis der Phasenzentren (4) erfolgt.

**Claims**

1. Device for determining the position of objects in the two-dimensional space with a first dimension and a second dimension whose direction vector is orthogonal to the direction vector of the first dimension, comprising at least one transmitter (1) with at least one transmitting antenna (3) and an imaging receiver circuit (2) with at least one receiving antenna array, Rx array, with receiving antenna lines (6) for scanning the first dimension by means of digital beam forming, wherein the receiving antenna array comprises a linear array, a Sparse array or an array with enlarged aperture, and wherein the receiving antenna lines (6) of the receiving antenna array of the receiver circuit (2) are arranged in the first dimension according to a curve function or according to the contour of a two-dimensional geometric object and are spread out in the second dimension, wherein the minimum number of discrete positions, Pos 2D, in the second dimension is defined by the number of receiving antenna lines (6) $N_{RxANT}$ according to

$$N_{Pos,2D} \geq \sqrt{N_{RxANT}}$$ and is $\geq 3$,

**characterized in that**

the arrangement of the receiving antenna lines (6) is defined by a random function, wherein the distance of the maximum deviation from the mean value in the second dimension is predetermined.

2. Device according to claim 1, wherein the receiving antenna lines (6) of the receiver circuit (2) are arranged in the first dimension as a straight line, triangle, sawtooth, or sinusoidal, or wherein the receiving antenna lines (6) of the receiver circuit (2) are arranged in the first dimension as a rectangle, circle, or ellipse.

3. Device according to claim 1 or 2, wherein the phase centers (4) of the receiving antenna lines (6) of the receiver circuit (2) are arranged in a non-regular pattern in the second dimension.

4. Device according to any one of claims 1 to 3, wherein the real receiving antenna array, Rx ANT, of the receiver circuit (2) is enlargeable by at least two switchable transmitting antennas (3) by means of MIMO-on-Tx to a virtual receiving antenna array, Rx Virt, with a number of virtual elements $N_{RxVirt} \geq N_{RxANT}$.

5. Device according to claim 4, wherein in the second dimension the phase centers (4) of the transmitting antennas (3) are identical, or wherein in the second dimension the phase centers (4) of the transmitting antennas (3) are different and an additional offset is formed in the virtual receiving antenna array, Rx Virt.

6. Device according to any one of claims 1 to 5, for use in a frequency modulated CW radar method, in digitally modulated radar and/or in pulse radar.

7. Device according to any one of claims 1 to 6, wherein the number of receiving antenna lines (6) is $N_{RxANT} \geq 4$.

8. Device according to any one of claims 1 to 7, wherein the at least one transmitting antenna (3) and the imaging receiver circuit (2) are operable in the frequency range from 1 GHz to 300 GHz, preferably in the frequency range from 20 GHz to 160 GHz, particularly preferably in the frequency range 76 GHz to 81 GHz.

9. Method for determining the position of objects in the two-dimensional space with a first dimension and a second dimension, using a device according to claims 1-8, comprising the following steps:

- transmitting a radar signal by means of at least one transmitting antenna (3)
- receiving a signal by means of imaging receiver circuitry (2) with at least one receiving antenna array, Rx array, for scanning the first dimension,
- digitizing the signal data
- performing a distance FFT and/or a velocity FFT and a digital beamforming;
- object detection and position determination.

10. Method according to claim 9, wherein the object detection is performed in the first dimension and the position determination is performed in the second dimension.

11. Method according to claim 9 or 10, wherein upon successful object detection in the first dimension, subsequent performance of position determination with beamforming for multiple beams is performed in the second dimension.

12. Method according to at least one of claims 9 to 11, wherein upon successful object detection in the first dimension, the subsequent performance of the position determination with beam shaping and an amplitude monopulse for multiple beams is performed in the second dimension.

13. Method according to at least one of claims 9 to 12, wherein, when the receiving antenna lines (6) of the receiving antenna array are arranged according to a curve function, the subsequent performance of the position determination is carried out with 2D beamforming based on the phase centers (4).

**Revendications**

1. Dispositif pour déterminer la position d'objets dans l'espace bidimensionnel avec une première dimension et une deuxième dimension, dont le vecteur de direction est orthogonal au vecteur de direction de la première dimension, comprenant au moins un émetteur (1) avec au moins une antenne d'émission (3) et un circuit récepteur de formation d'image (2) avec au moins un réseau d'antennes de réception, Rx Array, avec des lignes d'antennes de réception (6) pour le balayage de la première dimension au moyen d'une formation de faisceau numérique, le réseau d'antennes de réception étant un réseau linéaire, un réseau Sparse ou un réseau à ouverture agrandie, et dans lequel les lignes d'antennes de réception (6) du réseau d'antennes de réception du circuit récepteur (2) sont disposées dans la première dimension selon une fonction de courbe ou selon le contour d'un objet géométrique bidimensionnel et sont étalées dans la deuxième dimension, le nombre minimal de positions discrètes, Pos 2D, dans la deuxième dimension est déterminé par le nombre de lignes d'antennes de réception (6) $N_{RxANT}$ selon

$$N_{Pos,2D} \geq \sqrt{N_{RxANT}}$$ et est $\geq 3$,

**caractérisé en ce que**

la disposition des lignes d'antennes de réception (6) est déterminée par une fonction aléatoire, la distance de l'écart maximal par rapport à la valeur moyenne dans la deuxième dimension étant prédéterminée.

2. Dispositif selon la revendication 1, dans lequel les lignes d'antenne de réception (6) du circuit de réception (2) sont disposées dans la première dimension sous forme de ligne droite, de triangle, de dent de scie ou de sinusoïde, ou dans lequel les lignes d'antenne de réception (6) du circuit de réception (2) sont disposées dans la première dimension sous forme de rectangle, de cercle ou d'ellipse.

3. Dispositif selon la revendication 1 ou 2, dans lequel les centres de phase (4) des lignes d'antenne de réception (6) du circuit de réception (2) sont disposés dans la deuxième dimension selon un modèle non régulier.

4. Dispositif selon l'une des revendications 1 à 3, dans lequel le réseau d'antennes de réception réel, Rx ANT, du circuit récepteur (2) peut être agrandi par au moins deux antennes d'émission commutables (3) au moyen de MIMO-on-Tx en un réseau d'antennes de réception virtuel, Rx Virt, avec un nombre d'éléments virtuels $N_{RxVirt} \geq N_{RxANT}$.

5. Dispositif selon la revendication 4, dans lequel, dans la deuxième dimension, les centres de phase (4) des antennes d'émission (3) sont identiques, ou dans lequel, dans la deuxième dimension, les centres de phase (4) des antennes d'émission (3) sont différents et un décalage supplémentaire est formé dans le réseau d'antennes de réception virtuelles, Rx Virt.

6. Dispositif selon l'une des revendications 1 à 5, destiné à être utilisé dans un procédé de radar à modulation de fréquence CW, dans un radar à modulation numérique et/ou dans un radar à impulsions.

7. Dispositif selon l'une des revendications 1 à 6, dans lequel le nombre de lignes d'antennes de réception (6) est $N_{RxANT} \geq 4$.

8. Dispositif selon l'une des revendications 1 à 7, dans lequel l'au moins une antenne d'émission (3) et le circuit de réception imageur (2) peuvent fonctionner dans la plage de fréquences de 1 GHz à 300 GHz, de préférence dans la plage de fréquences de 20 GHz à 160 GHz, de manière particulièrement préférée dans la plage de fréquences de 76 GHz à 81 GHz.

9. Procédé pour déterminer la position d'objets dans un espace bidimensionnel ayant une première dimension et une deuxième dimension, en utilisant un dispositif selon les revendications 1 à 8, comprenant les étapes suivantes :

- Émission d'un signal radar avec au moins une antenne d'émission (3)
- Réception d'un signal au moyen d'un circuit récepteur d'imagerie (2) avec au moins un réseau d'antennes de réception, Rx Array, pour balayer la première dimension,
- Numérisation des données du signal
- Réalisation d'une FFT de distance et/ou d'une FFT de vitesse et d'une formation de faisceau numérique ;
- Détection d'objets et détermination de la position.

10. Procédé selon la revendication 9, dans lequel la détection d'objet s'effectue dans la première dimension et la détermination de position dans la deuxième dimension.

11. Procédé selon la revendication 9 ou 10, dans lequel, en cas de détection d'objet réussie dans la première dimension, la détermination de position avec formation de faisceau pour plusieurs faisceaux est effectuée dans la deuxième dimension.

12. Procédé selon au moins l'une des revendications 9 à 11, dans lequel, en cas de détection réussie d'un objet dans la première dimension, l'exécution ultérieure de la détermination de position avec formation de faisceau et une monopulse d'amplitude est effectuée pour plusieurs faisceaux dans la deuxième dimension.

13. Procédé selon au moins l'une des revendications 9 à 12, dans lequel, en cas d'agencement des lignes d'antennes de réception (6) du réseau d'antennes de réception selon une fonction de courbe, l'exécution ultérieure de la détermination de position est effectuée avec une formation de faisceau 2D sur la base des centres de phase (4).

FIG. 1

FIG. 2

FIG. 3

```
┌──────────┐    ┌──────────┐    ┌──────────┐    ┌──────────────┐
│ Messung  │──▶ │  FFT 1 / │──▶ │  FFT 2 / │──▶ │ Beamforming  │
│          │    │Range FFT │    │Velocity FFT│  │ 1. Dimension │
└──────────┘    └──────────┘    └──────────┘    └──────────────┘
                                       │                │
                                       │                ▼
                                       │        ┌──────────────┐
                                       │        │  Bestimmung  │
                                       │        │Lokaler Maxima/│
                                       │        │    OSCFAR    │
                                       │        └──────────────┘
                                       │                │
                                       │                ▼
                                       │        ┌──────────────┐    ┌──────────────┐
                                       └──────▶ │ Beamforming  │──▶ │  2D-Daten    │
                                                │ 2. Dimension │    │ für Range Velo│
                                                └──────────────┘    │    Zellen    │
                                                                    └──────────────┘
```

FIG. 4

FIG. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011113018 A1
- DE 102014014864 A1
- US 6246365 B1
- US 20100328157 A1
- US 20110080314 A1
- DE 102014219113 A1
- US 6205224 B1
- US 2011109495 A1